# EUROPEAN PATENT SPECIFICATION

(11) **EP 4 317 304 B1**
(45) Date of publication and mention of the grant of the patent: **18.11.2026**
(21) Application number: 22775216.9
(22) Date of filing: 11.03.2022
(51) Int. Cl.: C08J 5/18, C08F 8/44

(54) **FILM FOR SKIN PACK, METHOD FOR PRODUCING FILM FOR SKIN PACK, SKIN PACK PACKAGING MATERIAL, AND SKIN PACK PACKAGE**
FOLIE FÜR EINE SKINPACK-VERPACKUNG, VERFAHREN ZUR HERSTELLUNG EINER FOLIE FÜR EINE SKINPACK-VERPACKUNG, VERPACKUNGSMATERIAL FÜR EINE SKINPACK-VERPACKUNG UND SKINPACK-VERPACKUNG
FILM POUR EMBALLAGE « SKIN », PROCÉDÉ DE FABRICATION D'UN FILM POUR EMBALLAGE « SKIN », MATÉRIAU D'EMBALLAGE « SKIN » ET EMBALLAGE « SKIN »

(30) Priority: 22.03.2021 JP 2021047869
(43) Date of publication of application: 07.02.2024
(73) Proprietor: Dow-Mitsui Polychemicals Co., Ltd., Tokyo 104-0028 (JP)
(72) Inventor: MUKAI, Kenta, Ichihara-shi, Chiba 299-0108 (JP); TANIGUCHI, Yoshiteru, Ichihara-shi, Chiba 299-0108 (JP); MACHIYA, Hiroaki, Ichihara-shi, Chiba 299-0108 (JP)
(74) Representative: Gulde & Partner
(86) International application number: PCT/JP2022/011136
(87) International publication number: WO 2022/202424

(56) References cited:
- EP-A2- 0 229 715
- WO-A1-2019/181942
- JP-A- 2002 200 719
- JP-A- 2011 505 489
- JP-A- H0 564 540
- JP-A- H03 148 460
- KR-A- 20180 133 685
- US-A1- 2007 122 633
- US-A1- 2010 055 275
- US-A1- 2010 112 253
- US-B1- 6 294 602

## Description

### Technical Field

The present disclosure relates to a resin composition for a skin pack, a film for a skin pack, a method for producing a film for a skin pack, a skin pack packaging material, and a skin pack package.

### Background Art

In skin pack packaging, for example, a backing board on which contents (that is, a product to be packaged) are placed is put in a vacuum chamber including a lower chamber and an upper chamber, the inside of the vacuum chamber is evacuated, a lid material film is heated, and the lid material film is in close contact with and pseudo-adheres to the contents by a differential pressure when the upper chamber is released, thereby vacuum-packaging the contents. The skin pack packaging is a packaging form having excellent functions such as improving freshness preservation of a product to be packaged, enabling dripping suppression, and enabling fixation of a product to be packaged, as compared with other packaging forms.

As a resin to be a material for a film used for the skin pack packaging, for example, an ionomer described in Japanese Patent Application Laid-Open (JP-A) No. 2020-93417 or 2016-222259 is widely and generally used. In particular, it is known that a film produced using an ionomer of an ethylene-unsaturated carboxylic acid-based copolymer as a material is excellent in transparency, heat sealability, hot tackiness, and the like. An ionomer of an ethylene-(meth)acrylic acid copolymer also passes the regulations of Food and Drug Administration (FDA) of U.S. and the regulations as a food product packaging material of Japan. Therefore, particularly in a case in which a product to be packaged is a food product, an ionomer of an ethylene-(meth)acrylic acid-based copolymer is suitably used as a resin to be a material for a film used for skin pack packaging. Examples may be found in US 6 294 602 B1, US 2010/055275 A1, EP 0 229 715 A2, US 2010/112253 A1, US 2007/122633 A1, KR 2018 0133685 A, JP H05 64540 A, JP 2002 200719 A or JP H03 148460 A.

### SUMMARY OF INVENTION

### Problem to be Solved by Invention

As described above, in a case in which the skin pack packaging is performed, it is necessary to heat the film as the lid material, and the heating temperature thereof varies depending on the type of a machine and a device used for packaging. However, in a film produced using a conventional ionomer as a material, in a case in which the skin pack packaging is performed at a high temperature, breakage or pinholes may occur in the film. Therefore, the temperature at which the skin pack packaging is possible is limited to only a specific partial temperature range.

The disclosure has been made in view of the above circumstances, and an object thereof is to provide a resin composition for a skin pack with which a film capable of performing skin pack packaging in a wide temperature range is obtained, a film for a skin pack including a base layer containing the resin composition for a skin pack, a method for producing the film for a skin pack, a skin pack packaging material including the film for a skin pack, and a skin pack package including the film for a skin pack.

### Means for Solving the Problem

Specific means for solving the above problems include the following aspects. A first aspect relates to a film for a skin pack comprising a base layer and a sealant layer, wherein the base layer contains a resin composition for a skin pack, containing an ionomer (A) of an ethylene-unsaturated carboxylic acid-based copolymer, wherein a content of the ionomer (A) in the resin composition for a skin pack is from 95% by mass to 100% by mass, with respect to a total mass of the resin composition for a skin pack, and at least a part of the ionomer (A) of the ethylene-unsaturated carboxylic acid-based copolymer is neutralized with a sodium ion, wherein a neutralization degree of the ionomer (A) of the ethylene-unsaturated carboxylic acid-based copolymer is 55% or more, and wherein a structural unit derived from an unsaturated carboxylic acid is contained in an amount of from 18% by mass to 25% by mass with respect to a total of structural units of the ethylene-unsaturated carboxylic acid-based copolymer. Further, the ionomer (A) of an ethylene-unsaturated carboxylic acid-based copolymer satisfies the following Formula (1): $11 \leq \left(X\times Y\times 0.01\right) / Z$ Formula (1) wherein, in Formula (1):
X represents a content (% by mass) of a structural unit derived from an unsaturated carboxylic acid with respect to a total of structural units of the copolymer constituting the ionomer (A) of the ethylene-unsaturated carboxylic acid-based copolymer,
Y represents a neutralization degree, which is a percentage, of the ionomer (A) of the ethylene-unsaturated carboxylic acid-based copolymer, and
Z represents a melt flow rate, in g/10 min, of the ionomer (A) of the ethylene-unsaturated carboxylic acid-based copolymer as measured under conditions of 190°C and a load of 2160 g in accordance with JIS K 7210:1999.

Preferably, in the resin composition for a skin pack, containing an ionomer (A) of an ethylene-unsaturated carboxylic acid-based copolymer, a melt tension of the ionomer (A) of the ethylene-unsaturated carboxylic acid-based copolymer as measured by the following measurement method may be 320 mN or more, wherein the measurement method is as follows:
The ionomer (A) of the ethylene-unsaturated carboxylic acid-based copolymer is filled into a barrel heated to 180°C and having a diameter of 9.55 mm, the ionomer (A) of the ethylene-unsaturated carboxylic acid-based copolymer is extruded in a filament shape from a capillary die having a diameter of 2.095 mm at a piston descending speed of 5 mm/min, the filament-shaped ionomer (A) of the ethylene-unsaturated carboxylic acid-based copolymer is passed through a pulley with a load cell installed at a position of 300 mm below the capillary die, the filament-shaped ionomer (A) of the ethylene-unsaturated carboxylic acid-based copolymer is wound up with a winding roll, a winding speed of the filament-shaped ionomer (A) of the ethylene-unsaturated carboxylic acid-based copolymer is linearly increased at this time from an initial speed of 5.0 m/min to 200 m/min after 1 minute, and a load applied to the pulley with a load cell when the filament-shaped ionomer (A) of the ethylene-unsaturated carboxylic acid-based copolymer is broken is defined as the melt tension, in mN.

In a preferred embodiment, a thickness of the base layer may be from 40 µm to 300 µm.

A second aspect of the present invention relates to a method for producing the film for a skin pack described above, the method including forming the base layer using the resin composition for a skin pack by a casting method.

Another aspect of the present invention relates to a skin pack packaging material including a backing board and the film for a skin pack described above.

Another aspect of the present invention relates to a skin pack package including a backing board, a product to be packaged disposed on the backing board, and the film for a skin pack described above.

### Advantageous Effects of Invention

According to the disclosure, there are provided a film for a skin pack including a base layer containing a resin composition for a skin pack capable of performing skin pack packaging in a wide temperature range , a method for producing the film for a skin pack, a skin pack packaging material including the film for a skin pack, and a skin pack package including the film for a skin pack.

### DESCRIPTION OF EMBODIMENTS

Hereinafter, embodiments according to the disclosure will be described in detail.

In the disclosure, a numerical range that has been indicated by use of "to" includes the numerical values which are described before and after "to", as a lower limit value and an upper limit value, respectively.

In a case in which a plurality of substances corresponding to each component are present in a composition, the content ratio of each component in the composition in the disclosure means the total content ratio of the plurality of substances present in the composition unless otherwise specified.

In the disclosure, "(meth)acrylic acid" is a concept of including both acrylic acid and methacrylic acid, "(meth)acrylic acid alkyl ester" is a concept of including both acrylic acid alkyl ester and methacrylic acid alkyl ester, and "(co)polymer" is a concept of including both a polymer and a copolymer.

In the following description, a "content X (% by mass) of a structural unit derived from an unsaturated carboxylic acid with respect to a total of structural units of the copolymer constituting the ionomer (A) of the ethylene-unsaturated carboxylic acid-based copolymer" is also simply referred to as the "content X". A "neutralization degree Y, which is a percentage, of the ionomer (A) of the ethylene-unsaturated carboxylic acid-based copolymer" is also simply referred to as the "neutralization degree Y". A "melt flow rate Z, in g/10 min, of the ionomer (A) of the ethylene-unsaturated carboxylic acid-based copolymer as measured under conditions of 190°C and a load of 2160 g in accordance with JIS K 7210:1999" is also simply referred to as the "melt flow rate Z". The "melt flow rate" is also simply referred to as "MFR". The "ionomer (A) of the ethylene-unsaturated carboxylic acid-based copolymer" is also simply referred to as the "ionomer (A)".

### [Resin Composition for Skin Pack]

A resin composition for a skin pack of an embodiment of the disclosure contains an ionomer (A) of an ethylene-unsaturated carboxylic acid-based copolymer, and the ionomer (A) of the ethylene-unsaturated carboxylic acid-based copolymer satisfies the following Formula (1). $11 \leq \left(X\times Y\times 0.01\right) / Z$ Formula (1) wherein, in Formula (1):
X represents a content (% by mass) of a structural unit derived from an unsaturated carboxylic acid with respect to a total of structural units of the copolymer constituting the ionomer (A) of the ethylene-unsaturated carboxylic acid-based copolymer,
Y represents a neutralization degree, which is a percentage, of the ionomer (A) of the ethylene-unsaturated carboxylic acid-based copolymer, and
Z represents a melt flow rate, in g/10 min, of the ionomer (A) of the ethylene-unsaturated carboxylic acid-based copolymer as measured under conditions of 190°C and a load of 2160 g in accordance with JIS K 7210:1999.

**In** a case in which the resin composition for a skin pack of the embodiment of the disclosure contains the ionomer (A) of the ethylene-unsaturated carboxylic acid-based copolymer and the ionomer (A) of the ethylene-unsaturated carboxylic acid-based copolymer satisfies the above Formula (1), a film capable of skin pack packaging in a wide temperature range is obtained.

**In the** resin composition for a skin pack of the embodiment of the disclosure, the action of the ionomer (A) satisfying Formula (1) is not clear, but is estimated as follows.

**In** a case in which the ionomer (A) satisfies the above Formula (1), for example, in a case in which the values of the content X and the neutralization degree Y are large, the ionomer (A) is in a highly acidic state and a highly neutralized state, and the interaction due to ionic bonding between the ionomers (A) is stronger. Therefore, in a case in which the resin composition for a skin pack containing such an ionomer (A) is formed into a film, the film does not become locally thin and is hardly broken in a wide temperature range.

**In** a case in which the ionomer (A) satisfies the above Formula (1), for example, in a case in which the value of the melt flow rate Z is small, the fluidity of the ionomer (A) at the time of melting is low. Therefore, when the value of the melt flow rate of the ionomer (A) is small, in a case in which the resin composition for a skin pack containing such an ionomer (A) is formed into a film, the film does not become locally thin and is hardly broken in a wide temperature range.

The disclosure is not limited to the above surmised mechanism at all.

In $11 \leq \left(X\times Y\times 0.01\right) / Z$ (Formula (1)), from the viewpoint that the skin pack packaging in a wider temperature range is possible, the ionomer (A)
more preferably satisfies 12 ≤ (X × Y × 0.01)/Z,
still more preferably satisfies 13 ≤ (X × Y × 0.01)/Z,
particularly preferably satisfies 14 ≤ (X × Y × 0.01)/Z,
further preferably satisfies 15 ≤ (X × Y × 0.01)/Z,
even further preferably satisfies 17 ≤ (X × Y × 0.01)/Z, and
most preferably satisfies 19 ≤ (X × Y × 0.01)/Z.

From the viewpoint of processability and moldability, the ionomer (A)
preferably satisfies (X × Y × 0.01)/Z ≤ 150,
more preferably satisfies (X × Y × 0.01)/Z ≤ 50,
still more preferably satisfies (X × Y × 0.01)/Z ≤ 30, and
particularly preferably satisfies (X × Y × 0.01)/Z ≤ 25.

In regard to a method for allowing the ionomer (A) to satisfy the above Formula (1), methods such as the following may be used: increasing the value of the content (% by mass) of the structural unit derived from an unsaturated carboxylic acid with respect to the total structural units of the copolymer constituting the ionomer (A); increasing the value of the neutralization degree, which is a percentage, of the ionomer (A); or decreasing the value of the melt flow rate in g/10 min, of the ionomer (A).

The above-described upper limit values and lower limit values for (X × Y × 0.01)/Z described above may be freely combined to form a numerical range as long as there is no contradiction. For example, the ionomer (A) may satisfy 13 ≤ (X × Y × 0.01)/Z ≤ 30.

A resin composition for a skin pack of another embodiment of the disclosure contains an ionomer (A) of an ethylene-unsaturated carboxylic acid-based copolymer, in which a melt tension of the ionomer (A) of the ethylene-unsaturated carboxylic acid-based copolymer as measured by the following measurement method is 320 mN or more.

### Measurement method:

The ionomer (A) of the ethylene-unsaturated carboxylic acid-based copolymer is filled into a barrel heated to 180°C and having a diameter of 9.55 mm. The ionomer (A) of the ethylene-unsaturated carboxylic acid-based copolymer is extruded in a filament shape from a capillary die having a diameter of 2.095 mm at a piston descending speed of 5 mm/min. The filament-shaped ionomer (A) of the ethylene-unsaturated carboxylic acid-based copolymer is passed through a pulley with a load cell installed at a position of 300 mm below the capillary die, and the filament-shaped ionomer (A) of the ethylene-unsaturated carboxylic acid-based copolymer is wound up with a winding roll. A winding speed of the filament-shaped ionomer (A) of the ethylene-unsaturated carboxylic acid-based copolymer is linearly increased at this time from an initial speed of 5.0 m/min to 200 m/min after 1 minute, and a load applied to the pulley with a load cell when the filament-shaped ionomer (A) of the ethylene-unsaturated carboxylic acid-based copolymer is broken is defined as the melt tension, in mN.

**In** a case in which the resin composition for a skin pack of the other embodiment of the disclosure contains the ionomer (A) of the ethylene-unsaturated carboxylic acid-based copolymer and the melt tension of the ionomer (A) of the ethylene-unsaturated carboxylic acid-based copolymer as measured by the measurement method is 320 mN or more, a film capable of skin pack packaging in a wide temperature range is obtained.

**In** the resin composition for a skin pack of the other embodiment of the disclosure, the action of the ionomer (A) having a melt tension of 320 mN or more is not clear, but is estimated as follows.

The melt tension determined by the measurement method represents the resistance of the ionomer (A) to breakage against tension in a case in which the ionomer (A) is heated. **In a** case in which the skin pack packaging is performed, it is necessary to heat the film for a skin pack. Therefore, when the value of the melt tension of the ionomer (A) is large, in a case in which the composition for a skin pack containing such an ionomer (A) is formed into a film, the film does not become locally thin and is hardly broken in a wide temperature range.

The disclosure is not limited to the above surmised mechanism at all.

The melt tension of the ionomer (A) as measured by the measurement method is 320 mN or more. From the viewpoint that the skin pack packaging in a wider temperature range is possible, the melt tension of the ionomer (A) as measured by the measurement method is preferably 330 mN or more, more preferably 340 mN or more, still more preferably 350 mN or more, further preferably 360 mN or more, even further preferably 380 mN or more, still further preferably 400 mN or more, and most preferably 450 mN or more. These represent examples of the lower limit value of the melt tension of the ionomer (A).

The melt tension of the ionomer (A) as measured by the measurement method is preferably 600 mN or less, more preferably 550 mN or less, still more preferably 500 mN or less, and particularly preferably 470 mN or less, from the viewpoint of processability and moldability. These represent examples of the upper limit value of the melt tension of the ionomer (A).

The above-described upper limit values and lower limit values for the melt tension of the ionomer (A) as measured by the measurement method may be freely combined to form a numerical range as long as there is no contradiction. For example, the melt tension of the ionomer (A) as measured by the measurement method may be from 320 mN to 600 mN, from 330 mN to 550 mN, from 340 mN to 500 mN, from 350 mN to 470 mN, from 360 mN to 470 mN, from 380 mN to 470 mN, from 400 mN to 470 mN, or from 450 mN to 470 mN.

**In** regard to a method for setting the melt tension of the ionomer (A) as measured by the measurement method to 320 mN or more, methods such as the following may be used: increasing the value of the content (% by mass) of the structural unit derived from an unsaturated carboxylic acid with respect to the total structural units of the copolymer constituting the ionomer (A); increasing the value of the neutralization degree, which is a percentage, of the ionomer (A); or decreasing the value of the melt flow rate, in g/10 min, of the ionomer (A).

### <Ionomer (A)>

### -Configuration of Ionomer (A)-

In the following description, unless otherwise specified, the "resin composition for a skin pack of the disclosure" is a concept of including both the "resin composition for a skin pack of one embodiment of the disclosure" and the "resin composition for a skin pack of the other embodiment of the disclosure".

In the following description, unless otherwise specified, the "ionomer (A) of the disclosure" is a concept of including both the "ionomer (A) contained in the resin composition for a skin pack of one embodiment of the disclosure" and the "ionomer (A) contained in resin composition for a skin pack of the other embodiment of the disclosure".

The resin composition for a skin pack of the disclosure contains the ionomer (A). That is, in the ionomer (A) of the disclosure, at least a part of an acidic group (for example, carboxy group) in the ethylene-unsaturated carboxylic acid-based copolymer as a base polymer is neutralized with a metal ion.

The ethylene-unsaturated carboxylic acid-based copolymer (base polymer) which can be included in the ionomer (A) of the disclosure is a copolymer obtained by copolymerizing at least ethylene and an unsaturated carboxylic acid, and has a structural unit derived from ethylene and a structural unit derived from an unsaturated carboxylic acid.

The ethylene-unsaturated carboxylic acid-based copolymer may be an ethylene-unsaturated carboxylic acid copolymer or an ethylene-unsaturated carboxylic acid-unsaturated carboxylic acid ester copolymer. The ethylene-unsaturated carboxylic acid-based copolymer of the disclosure is preferably an ethylene-unsaturated carboxylic acid copolymer.

### (Structural Unit Derived from Ethylene)

From the viewpoint that the skin pack packaging in a wide temperature range is possible, the content of the structural unit derived from ethylene in the ethylene-unsaturated carboxylic acid-based copolymer is preferably 70% by mass or more, more preferably 75% by mass or more, and still more preferably 78% by mass or more, with respect to the total structural unit of the ethylene-unsaturated carboxylic acid-based copolymer. These represent examples of the lower limit value of the content of the structural unit derived from ethylene in the ethylene-unsaturated carboxylic acid-based copolymer.

From the viewpoint that the skin pack packaging in a wide temperature range is possible, the content of the structural unit derived from ethylene in the ethylene-unsaturated carboxylic acid-based copolymer is preferably 99% by mass or less, more preferably 95% by mass or less, and still more preferably 90% by mass or less, with respect to the total structural unit of the ethylene-unsaturated carboxylic acid-based copolymer. These represent examples of the upper limit value of the content of the structural unit derived from ethylene in the ethylene-unsaturated carboxylic acid-based copolymer.

The above-described upper limit values and lower limit values may be freely combined to form a numerical range as long as there is no contradiction. For example, the content of the structural unit derived from ethylene in the ethylene-unsaturated carboxylic acid-based copolymer may be from 70% by mass to 99% by mass, from 75% by mass to 95% by mass, or from 78% by mass to 90% by mass.

### (Structural Unit Derived from Unsaturated Carboxylic Acid)

Examples of the structural unit derived from an unsaturated carboxylic acid in the ethylene-unsaturated carboxylic acid-based copolymer include structural units derived from acrylic acid, methacrylic acid, fumaric acid, maleic acid, and the like. Among these, the structural unit derived from an unsaturated carboxylic acid is preferably a structural unit derived from acrylic acid or a structural unit derived from methacrylic acid, and more preferably a structural unit derived from methacrylic acid.

From the viewpoint that the skin pack packaging in a wide temperature range is possible, the content (that is, the content X of the disclosure) of the structural unit derived from an unsaturated carboxylic acid in the ethylene-unsaturated carboxylic acid-based copolymer is 18% by mass or more, with respect to the total structural unit of the ethylene-unsaturated carboxylic acid-based copolymer. These represent examples of the lower limit value of the content of the structural unit derived from an unsaturated carboxylic acid in the ethylene-unsaturated carboxylic acid-based copolymer.

From the viewpoint that the skin pack packaging in a wide temperature range is possible, the content (that is, the content X of the disclosure) of the structural unit derived from an unsaturated carboxylic acid in the ethylene-unsaturated carboxylic acid-based copolymer is 25% by mass or less, and particularly preferably 22% by mass or less, with respect to the total structural unit of the ethylene-unsaturated carboxylic acid-based copolymer. These represent examples of the upper limit value of the content of the structural unit derived from an unsaturated carboxylic acid in the ethylene-unsaturated carboxylic acid-based copolymer.

The above-described upper limit values and lower limit values may be freely combined to form a numerical range as long as there is no contradiction. For example, the content (that is, the content X of the disclosure) of the structural unit derived from an unsaturated carboxylic acid in the ethylene-unsaturated carboxylic acid-based copolymer may be from 18% by mass to 22% by mass.

Preferred specific examples of the ethylene-unsaturated carboxylic acid-based copolymer include an ethylene-(meth)acrylic acid copolymer.

### (Structural Unit Derived from Other Monomer)

The ethylene-unsaturated carboxylic acid-based copolymer may contain a structural unit derived from a monomer other than ethylene and an unsaturated carboxylic acid, in addition to the structural unit derived from ethylene and the structural unit derived from an unsaturated carboxylic acid.

Examples of the structural unit derived from the other monomer include structural units derived from unsaturated carboxylic acid esters, unsaturated hydrocarbons other than ethylene (such as propylene, butene, 1,3-butadiene, pentene, 1,3-pentadiene, and 1-hexene), vinyl esters (such as vinyl acetate and vinyl propionate), oxides such as vinyl sulfuric acid and vinyl nitric acid, halogen compounds (such as vinyl chloride and vinyl fluoride), vinyl group-containing primary and secondary amine compounds, carbon monoxide, sulfur dioxide, and the like.

Among these, from the viewpoint that the skin pack packaging in a wide temperature range is possible, the structural unit derived from the other monomer may be a structural unit derived from an unsaturated carboxylic acid ester.

The unsaturated carboxylic acid ester is not particularly limited as long as it can be copolymerized with ethylene and an unsaturated carboxylic acid, and examples thereof include an unsaturated carboxylic acid alkyl ester.

Examples of the unsaturated carboxylic acid alkyl ester include acrylic acid alkyl esters such as methyl acrylate, ethyl acrylate, isopropyl acrylate, n-propyl acrylate, isobutyl acrylate, n-butyl acrylate, and isooctyl acrylate; methacrylic acid alkyl esters such as methyl methacrylate, ethyl methacrylate, isopropyl methacrylate, n-propyl methacrylate, isobutyl methacrylate, n-butyl methacrylate, and isooctyl methacrylate; and maleic acid alkyl esters such as dimethyl maleate and diethyl maleate. Among them, an unsaturated carboxylic acid alkyl ester in which the number of carbon atoms of the alkyl group in the alkyl ester is from 1 to 12 may be used.

Among these, the unsaturated carboxylic acid alkyl ester may be an acrylic acid alkyl ester or methacrylic acid alkyl ester such as methyl acrylate, ethyl acrylate, isopropyl acrylate, n-propyl acrylate, isobutyl acrylate, n-butyl acrylate, isooctyl acrylate, methyl methacrylate, ethyl methacrylate, isopropyl methacrylate, n-propyl methacrylate, isobutyl methacrylate, n-butyl methacrylate, or isooctyl methacrylate, or may be a lower alkyl ester of acrylic acid or a lower alkyl ester of methacrylic acid (for example, an alkyl ester having an alkyl group having from 2 to 5 carbon atoms).

**In** a case in which the ethylene-unsaturated carboxylic acid-based copolymer includes a structural unit derived from an unsaturated carboxylic acid ester, specific examples of the ethylene-unsaturated carboxylic acid-based copolymer include an ethylene-(meth)acrylic acid-(meth)acrylic acid alkyl ester copolymers (such as an ethylene-(meth)acrylic acid-methyl acrylate copolymer, an ethylene-(meth)acrylic acid-ethyl acrylate copolymer, an ethylene-(meth)acrylic acid-n-butyl acrylate copolymer, and an ethylene-(meth)acrylic acid-isobutyl acrylate copolymer).

From the viewpoint of securing flexibility, the content of the structural unit derived from the other monomer may be 0.1% by mass or more or 1% by mass or more with respect to the total structural unit of the ethylene-unsaturated carboxylic acid-based copolymer. These represent examples of the lower limit value of the content of the structural unit derived from the other monomer.

From the viewpoint of securing flexibility, the content of the structural unit derived from the other monomer may be 20% by mass or less or 15% by mass or less with respect to the total structural unit of the ethylene-unsaturated carboxylic acid-based copolymer. These represent examples of the upper limit value of the content of the structural unit derived from the other monomer.

The above-described upper limit values and lower limit values may be freely combined to form a numerical range as long as there is no contradiction. For example, the content of the structural unit derived from the other monomer may be from 0.1% by mass to 20% by mass or from 1% by mass to 15% by mass.

The ethylene-unsaturated carboxylic acid-based copolymer may be any of a block copolymer, a random copolymer, and a graft copolymer. From the viewpoint of industrial availability, the ethylene-unsaturated carboxylic acid-based copolymer is preferably a random copolymer.

### (Metal Ion)

The sodium ion used for neutralization of the acidic group of the ionomer (A) of the ethylene-unsaturated carboxylic acid-based copolymer of the disclosure may be used singly or in combination with two or more kinds thereof.

Metal ions other than sodium ions may be a monovalent metal ion or a polyvalent metal ion. Examples of the monovalent metal ion include alkali metal ions such as a lithium ion, a potassium ion, a rubidium ion, and a cesium ion. The polyvalent metal ion may be, for example, a divalent metal ion, a trivalent metal ion, or a tetravalent metal ion, or may be a polyvalent metal ion in which an alkaline earth metal is ionized, a polyvalent metal ion in which a transition element is ionized, or a polyvalent metal ion in which other metal elements are ionized.

Examples of the divalent metal ion include a magnesium ion, a calcium ion, a strontium ion, a barium ion, a manganese ion, an iron ion, a cobalt ion, a nickel ion, a copper ion, and a zinc ion.

Examples of the trivalent metal ion include an aluminum ion, a manganese ion, and an iron ion.

Examples of the tetravalent metal ion include a manganese ion.

Examples of the polyvalent metal ion in which an alkaline earth metal is ionized include a calcium ion, a strontium ion, and a barium ion.

Examples of the polyvalent metal ion formed by ionization of a transition element include a manganese ion, an iron ion, a cobalt ion, a nickel ion, and a copper ion.

Examples of the polyvalent metal ion formed by ionization of other metal elements include a magnesium ion, an aluminum ion, and a zinc ion.

From the viewpoint that the skin pack packaging in a wide temperature range is possible, at least a part of the ionomer (A) of the ethylene-unsaturated carboxylic acid-based copolymer of the disclosure is neutralized with a sodium ion. That is, the ionomer (A) of the ethylene-unsaturated carboxylic acid-based copolymer of the disclosure may be neutralized with two or more kinds of metal ions, and a portion neutralized with a sodium ion is present. The ionomer (A) of the ethylene-unsaturated carboxylic acid-based copolymer of the disclosure is more preferably neutralized with a sodium ion.

The neutralization degree (that is, the neutralization degree Y of the disclosure) of the ionomer (A) of the disclosure is 55% or more, and even further preferably 60% or more. In a case in which the neutralization degree is 10% or more, the performance as an ionomer can be more effectively exhibited. These represent examples of the lower limit value of the neutralization degree of the ionomer (A) of the disclosure.

The neutralization degree (that is, the neutralization degree Y of the disclosure) of the ionomer (A) of the disclosure is preferably 99% or less, more preferably 96% or less, still more preferably 94% or less, further preferably 92% or less, and even further preferably 90% or less. When the neutralization degree is 99% or less, in a case in which a base layer is formed, ion aggregation can be moderately suppressed, a decrease in fluidity can be further suppressed, and, molding processability can be more suitably maintained. These represent examples of the upper limit value of the neutralization degree of the ionomer (A) of the disclosure.

The above-described upper limit values and lower limit values may be freely combined to form a numerical range as long as there is no contradiction. For example, the neutralization degree (that is, the neutralization degree Y of the disclosure) of the ionomer (A) of the disclosure may be from 55% to 92%, from 55% to 90%, or from 60% to 90%.

In the disclosure, the "neutralization degree" refers to a blending ratio (mol%) of metal ions to the number of moles of acidic group (for example, carboxy group) of the ethylene-unsaturated carboxylic acid-based copolymer (base polymer).

### -Melt Flow Rate of Ionomer (A)-

The melt flow rate (a value in g/10 min), as measured under conditions of 190°C and a load of 2160 g in accordance with JIS K 7210:1999) of the ionomer (A) of the disclosure (that is, the melt flow rate Z of the disclosure) is preferably 0.01 g/10 min or more, more preferably 0.05 g/10 min or more, and still more preferably 0.1 g/10 min or more, from the viewpoint of processability. These represent examples of the lower limit value of the melt flow rate of the ionomer (A) of the disclosure.

The melt flow rate (a value, in g/10 min), as measured under conditions of 190°C and a load of 2160 g in accordance with JIS K 7210:1999) of the ionomer (A) of the disclosure (that is, the melt flow rate Z of the disclosure) is preferably 100 g/10 min or less, more preferably 30 g/10 min or less, still more preferably 10 g/10 min or less, particularly preferably 3.0 g/10 min or less, further preferably 1.0 g/10 min or less, and even further preferably 0.8 g/10 min or less, from viewpoint that the skin pack packaging in a wide temperature range is possible. These represent examples of the upper limit value of the melt flow rate of the ionomer (A) of the disclosure.

The above-described upper limit values and lower limit values may be freely combined to form a numerical range as long as there is no contradiction. For example, the melt flow rate (that is, the melt flow rate Z) of the ionomer (A) of the disclosure may be from 0.01 g/10 min to 100 g/10 min, from 0.05 g/10 min to 30 g/10 min, from 0.05 g/10 min to 10 g/10 min, from 0.05 g/10 min to 3.0 g/10 min, from 0.05 g/10 min to 1.0 g/10 min, from 0.05 g/10 min to 0.8 g/10 min, or from 0.1 g/10 min to 0.8 g/10 min.

### -Content of Ionomer (A) in Resin Composition for Skin Pack-

From the viewpoint that the skin pack packaging in a wide temperature range is possible, the content of the ionomer (A) in the resin composition for a skin pack of the disclosure is from 95% by mass to 100% by mass, with respect to the total mass of the resin composition for a skin pack.

The ionomer (A) contained in the resin composition for a skin pack of the disclosure may contain two or more kinds of ethylene-unsaturated carboxylic acid-based copolymers. For example, the ionomer (A) may contain an ethylene-acrylic acid copolymer and an ethylene-methacrylic acid copolymer, or may contain an ethylene-unsaturated carboxylic acid-based copolymer and an ethylene-unsaturated carboxylic acid-unsaturated carboxylic acid ester-based copolymer.

### -Combination of Numerical Values of Content X, Neutralization Degree Y, and Melt Flow Rate Z-

In the ionomer (A) contained in the resin composition for a skin pack of the disclosure, the combination of the numerical values of the content X (% by mass) of the structural unit derived from an unsaturated carboxylic acid with respect to the total structural unit of the copolymer constituting the ionomer (A), the neutralization degree Y, which is a percentage, of the ionomer (A), and the melt flow rate Z , in g/10 min, of the ionomer (A) as measured under conditions of 190°C and a load of 2160 g in accordance with JIS K 7210:1999 is not particularly limited as long as the combination satisfies the above Formula (1).

In the ionomer (A) of the disclosure, regarding the combination of the numerical values of the content X, the neutralization degree Y, and the melt flow rate Z,
it is more preferable that the content X is from 18% by mass to 30% by mass, the neutralization degree Y is from 50% to 90%, and the melt flow rate Z is from 0.1 g/10 min to 30 g/10 min;
it is still more preferable that the content X is from 20% by mass to 30% by mass, the neutralization degree Y is from 50% to 80%, and the melt flow rate Z is from 0.1 g/10 min to 3.0 g/10 min; and
it is still more preferable that the content X is from 20% by mass to 30% by mass, the neutralization degree Y is from 55% to 80%, and the melt flow rate Z is from 0.1 g/10 min to 0.8 g/10 min, from the viewpoint that the skin pack packaging in a wide temperature range is possible and the viewpoint of ease of handling.

### -Specific Example of Ionomer (A)-

As the ionomer (A) of the disclosure, commercially available products on the market may be used. Examples of the commercially available products include HIMILAN (registered trademark) series manufactured by DOW-MITSUI POLYCHEMICALS CO., LTD.

The ionomer (A) of the disclosure may include two or more kinds of ionomers (A).

### <Other Components>

The resin composition for a skin pack of the disclosure may contain other components in addition to the ionomer (A).

As the other components, for example, for the purpose of improving or adjusting various properties such as molding processability and productivity, resins other than the ionomer (A); and additives such as inorganic particles such as silica, talc, kaolin, and calcium carbonate, pigments such as titanium oxide and carbon black, dyes, processing aids, flow strengthening additives, impact resistance improvers, flame retardants, weather resistance stabilizers, UV absorbers, UV stabilizers, heat resistance stabilizers, antistatic agents, tackifiers, anti-adhesive agents, melt viscosity improvers, dispersants, surfactants, chelating agents, crosslinking agents, coupling agents, adhesives, primers, lubricants, nucleating agents, plasticizers, and antiaging agents can be added if appropriate.

The content of resins other than the ionomer (A) is preferably 20% by mass or less, more preferably 10% by mass or less, still more preferably 5% by mass or less, and even more preferably 3% by mass or less, with respect to the total mass of the resin composition for a skin pack.

The content of additives is preferably in a range of from 0.1% by mass to 3% by mass in the case of the inorganic additive, and is preferably in a range of from 0.01% by mass to 1% by mass in the case other than the inorganic additive, with respect to the total mass of the resin composition for a skin pack.

### [Film for Skin Pack]

A film for a skin pack of the disclosure includes a base layer containing the resin composition for a skin pack of the disclosure.

Since the film for a skin pack of the disclosure includes the base layer containing the resin composition for a skin pack of the disclosure, the skin pack packaging in a wide temperature range is possible.

The shape of the film for a skin pack of the disclosure is not particularly limited, and, for example, a sheet shape (that is, a film shape) is suitable.

The thickness of the film for a skin pack of the disclosure is not particularly limited, and may be selected according to the strength required for skin pack packaging. From the viewpoint of strength, handleability, adhesion to a product to be packaged, ease of production, and the like, the thickness of the film is preferably from 40 µm to 300 µm, more preferably from 50 µm to 250 µm, and still more preferably from 60 µm to 200 µm.

### <Base Layer>

The base layer included in the film for a skin pack of the disclosure is a layer containing the above-described resin composition for a skin pack of the disclosure. The structure of the base layer may be a single layer structure or a layered structure including two or more layers. The base layer is produced, for example, by a casting method or melt extrusion using the resin composition for a skin pack of the disclosure (and other components such as additives if necessary).

The content of the resin composition for a skin pack of the disclosure in the base layer included in the film for a skin pack of the disclosure is preferably from 80% by mass to 100% by mass, more preferably from 90% by mass to 100% by mass, still more preferably from 95% by mass to 100% by mass, and further preferably from 97% by mass to 100% by mass, with respect to the total mass of the base layer.

The thickness of the base layer included in the film for a skin pack of the disclosure is not particularly limited, and may be selected according to the strength required for skin pack packaging. From the viewpoint of strength, handleability, adhesion to a product to be packaged, ease of production, and the like, the thickness of the base layer is preferably from 40 µm to 300 µm, more preferably from 50 µm to 250 µm, and still more preferably from 60 µm to 200 µm.

As long as the effect of the disclosure can be obtained, resins other than the ionomer (A); and additives such as inorganic particles such as silica, talc, kaolin, and calcium carbonate, pigments such as titanium oxide and carbon black, dyes, processing aids, flow strengthening additives, impact resistance improvers, flame retardants, weather resistance stabilizers, UV absorbers, UV stabilizers, heat resistance stabilizers, antistatic agents, tackifiers, anti-adhesive agents, melt viscosity improvers, dispersants, surfactants, chelating agents, crosslinking agents, coupling agents, adhesives, primers, lubricants, nucleating agents, plasticizers, and antiaging agents can be added, if appropriate, to the base layer, for the purpose of improving or adjusting various properties such as molding processability and productivity.

The content of resins other than the ionomer (A) is preferably 20% by mass or less, more preferably 10% by mass or less, still more preferably 5% by mass or less, with respect to the total mass of the base layer.

The content of additives is preferably in a range of from 0.1% by mass to 3% by mass in the case of the inorganic additive, and is preferably in a range of from 0.01% by mass to 1% by mass in the case other than the inorganic additive, with respect to the total mass of the base layer.

### <Sealant Layer>

The film for a skin pack of the disclosure may further include a sealant layer. The sealant layer is a layer on which the base layer containing the resin composition for a skin pack of the disclosure is layered directly or with another layer interposed therebetween, and which is used for attachment to another member.

The material for the sealant layer is not particularly limited. The structure of the sealant layer may be a single layer structure or a layered structure including two or more layers.

The sealant layer preferably contains a resin. The resin is preferably a thermoplastic resin.

The thermoplastic resin is not particularly limited, and examples thereof include polyethylenes such as high-density polyethylene, high-pressure low-density polyethylene, low-density polyethylene (LDPE), and linear low-density polyethylene (LLDPE), an ethylene-unsaturated carboxylic acid-based copolymer or an ionomer thereof, an ethylene-unsaturated ester copolymer, an ethylene-vinyl acetate copolymer (EVA), an ethylene-α-olefin copolymer elastomer, polypropylene, a propylene-based copolymer (a copolymer of propylene and α-olefin other than propylene), polybutene, other olefin-based (co)polymers, and polyolefins such as polymer blends thereof. Examples of the α-olefin include propylene, 1-butene, 1-pentene, 1-hexene, 1-octene, 1-decene, 1-dodecene, and 4-methyl-1-pentene. The sealant layer more preferably contains at least one selected from the group consisting of an ionomer of an ethylene-unsaturated carboxylic acid copolymer and an ethylene-unsaturated ester copolymer.

**In** particular, in a case in which the sealant layer contains at least one selected from the above group, the extensibility of the film for a skin pack is improved. The film for a skin pack having extensibility further improves followability to the shape of a product to be packaged and adhesion to the product to be packaged.

The thickness of the sealant layer (the total thickness in the case of a layered structure including two or more layers) is not particularly limited, and it is preferably from 10 µm to 300 µm, more preferably from 20 µm to 250 µm, and still more preferably from 30 µm to 200 µm.

As long as the effect of the disclosure can be obtained, for the purpose of improving or adjusting various properties such as molding processability and productivity, additives such as inorganic particles such as silica, talc, kaolin, and calcium carbonate, pigments such as titanium oxide and carbon black, dyes, processing aids, flow strengthening additives, impact resistance improvers, flame retardants, weather resistance stabilizers, UV absorbers, UV stabilizers, heat resistance stabilizers, antistatic agents, tackifiers, anti-adhesive agents, melt viscosity improvers, dispersants, surfactants, chelating agents, crosslinking agents, coupling agents, adhesives, primers, lubricants, nucleating agents, plasticizers, and antiaging agents can be added, if appropriate, to the sealant layer.

The content of additives is preferably in a range of from 0.1% by mass to 3% by mass in the case of the inorganic additive, and is preferably in a range of from 0.01% by mass to 1% by mass in the case other than the inorganic additive, with respect to the total mass of the sealant layer.

### <Method for Producing Film for Skin Pack>

A method for producing the film for a skin pack of the disclosure is not particularly limited.

The film for a skin pack of the disclosure can be produced by forming a base layer using a general method such as inflation or a casting method. From the viewpoint of controlling the thickness of the film for a skin pack, a method of forming a base layer using a casting method is preferable. That is, the method for producing the film for a skin pack of the disclosure preferably includes forming the base layer using the resin composition for a skin pack by a casting method.

In a case in which the film for a skin pack of the disclosure further includes a sealant layer, examples of a method for producing the film for a skin pack include general methods such as a method in which a base layer obtained by extrusion-molding the resin composition for a skin pack with an extruder is extrusion-laminated to a sealant layer directly or with another layer interposed therebetween, a so-called thermal lamination method in which a base layer formed into a film by inflation or T-die cast forming is laminated to a sealant layer, a dry lamination method, a sand lamination method, a coextrusion inflation method, and a coextrusion T-die method. From the viewpoint of controlling the thickness of the film for a skin pack, it is preferable to use a coextrusion T-die method as a method for producing a film for a skin pack further including a sealant layer.

The film may be irradiated with radiation by a known method before or after stretching the film in the method for producing the film for a skin pack of the disclosure. As a result, the ionomer (A) constituting the base layer or the resin constituting the sealant layer is crosslinked, and the stretchability, heat resistance, and mechanical strength tend to be improved. Examples of the radiation used for irradiation include α-rays, β-rays, electron beams, γ-rays, and X-rays. Among these, from the viewpoint that the crosslinking effect before and after irradiation is large, the radiation used for irradiation may be electron beams and γ-rays, or may be electron beams.

In regard to radiation irradiation conditions, for example, in the case of electron beam irradiation, an acceleration voltage may be from 150 kV to 500 kV, and an irradiation dose may be from 10 kGy (kilogray) to 200 kGy. In the case of γ-rays, a dose rate may be from 0.05 kGy/hr to 3 kGy/hr. When the accelerating voltage or the irradiation dose is equal to or higher than the lower limit, the resin tends to be sufficiently crosslinked; on the other hand, when the accelerating voltage or the irradiation dose is equal to or lower than the upper limit, in a case in which the resin contained in the sealant layer is polyvinylidene chloride, decomposition of polyvinylidene chloride can be suppressed.

The inner surface, the outer surface, or both surfaces of the film for a skin pack of the disclosure may be subjected to a corona discharge treatment, a plasma treatment, or a flame treatment.

### [Skin Pack Packaging Material]

A skin pack packaging material of the disclosure includes a backing board and the film for a skin pack of the disclosure.

Since the skin pack packaging material of the disclosure includes the film for a skin pack of the disclosure, the skin pack packaging in a wide temperature range is possible, puncture strength is excellent, and excellent heat sealability with respect to the backing board is exhibited. The skin pack packaging material of the disclosure also has excellent adhesion to a product to be packaged having a complicated shape.

### <Backing Board>

The backing board included in the skin pack packaging material of the disclosure is not particularly limited, and examples thereof include a general-purpose flat backing board film (for example, a flat base sheet such as paperboard, a plastic sheet, or a polypropylene (PP) sheet) used in conventional skin pack packaging. As the backing board, a molded body obtained by molding a flat backing board film into a desired shape may be used.

### <Film for Skin Pack>

As the film for a skin pack included in the skin pack packaging material of the disclosure, the above-described film for a skin pack can be used.

### [Skin Pack Package]

A skin pack package of the disclosure includes a backing board, a product to be packaged disposed on the backing board, and the film for a skin pack of the disclosure.

Since the skin pack package of the disclosure includes the film for a skin pack of the disclosure, the skin pack package enables the skin pack packaging in a wide temperature range and is a package having excellent puncture strength, exhibiting excellent heat sealability with respect to the backing board, and having excellent adhesion to a product to be packaged having a complicated shape.

### <Backing Board>

The backing board included in the skin pack package of the disclosure is not particularly limited, and examples thereof include a general-purpose flat backing board film (for example, a flat base sheet such as paperboard, a plastic sheet, or a polypropylene (PP) sheet) used in conventional skin pack packaging. As the backing board, a molded body obtained by molding a flat backing board film into a desired shape may be used.

### <Product to Be Packaged>

The product to be packaged included in the skin pack package of the disclosure is not particularly limited as long as it can be packaged by the film for a skin pack of the disclosure. Examples of the product to be packaged include various articles such as food products, beverage products, cosmetics, household goods, stationery, quasi-drugs, pharmaceuticals, medical instruments, stationery, toys, electronic component mounting boards, and household goods. Examples of the food products include meat, meat products, meat dishes, fish and shellfish, fish and shellfish dishes, seafood processed food products, side dishes, cooked pasta, milk processed food products, and frozen food products. With respect to the food products, Ministry of Health and Welfare Notice No. 370 ("Standards for Foods, Additives, etc." can be referenced.). From the viewpoint of puncture strength, heat sealability, and adhesiveness, the product to be packaged is preferably a food product having a complicated shape such as bacon, sausage, ham, meat, or cheese.

### <Film for Skin Pack>

As the film for a skin pack included in the skin pack package of the disclosure, the above-described film for a skin pack can be used.

### EXAMPLES

Hereinafter, the disclosure will be more specifically described with reference to Examples, but the disclosure is not limited to the following Examples as long as the gist is retained.

### <Measurement Method of Melt Flow Rate>

In the following Examples and Comparative Examples, the melt flow rate (MFR) of the ionomer was measured under conditions of 190°C and a load of 2160 g in accordance with JIS K 7210:1999.

### <Measurement Method of Melt Tension>

In the following Examples and Comparative Examples, the melt tension of the ionomer was measured by the following method using a melt tension tester (manufactured by Toyo Seiki Seisaku-sho, Ltd.).

The ionomer was filled into a barrel heated at 180°C and having a diameter of 9.55 mm. The ionomer was extruded in a filament shape from a capillary die having a diameter of 2.095 mm at a piston descending speed of 5 mm/min. The filament-shaped ionomer was passed through a pulley with a load cell installed at a position of 300 mm below the capillary die, and the filament-shaped ionomer was wound up with a winding roll. The winding speed of the filament-shaped ionomer was linearly increased at this time from an initial speed of 5.0 m/min to 200 m/min after 1 minute, and a load applied to the pulley with a load cell when the filament-shaped ionomer was broken was determined as the melt tension, in mN.

### <Ionomer (A) of Ethylene-Unsaturated Carboxylic Acid-Based Copolymer>

As the ionomer (A) of the ethylene-unsaturated carboxylic acid-based copolymer of the disclosure, the following ionomers were prepared.
- Ionomer 1: Na-Neutralized Product of Ethylene-Methacrylic Acid Copolymer
   (content of the structural unit derived from ethylene: 80% by mass, content of the structural unit derived from methacrylic acid: 20% by mass, neutralization degree with Na ion: 70%, MFR: 0.7 g/10 min, the ionomer (A) of the disclosure)
- Ionomer 2: Na-Neutralized Product of Ethylene-Methacrylic Acid Copolymer
   (content of the structural unit derived from ethylene: 80% by mass, content of the structural unit derived from methacrylic acid: 20% by mass, neutralization degree with Na ion: 55%, MFR: 0.8 g/10 min, the ionomer (A) of the disclosure)
- Ionomer 3: Na-Neutralized Product of Ethylene-Methacrylic Acid Copolymer
   (content of the structural unit derived from ethylene: 85% by mass, content of the structural unit derived from methacrylic acid: 15% by mass, neutralization degree with Na ion: 54%, MFR: 0.9 g/10 min)
- Ionomer 4: Na-Neutralized Product of Ethylene-Methacrylic Acid Copolymer
   (content of the structural unit derived from ethylene: 90% by mass, content of the structural unit derived from methacrylic acid: 10% by mass, neutralization degree with Na ion: 50%, MFR: 1.3 g/10 min)
- Ionomer 5: Na-Neutralized Product of Ethylene-Methacrylic Acid Copolymer
   (content of the structural unit derived from ethylene: 85% by mass, content of the structural unit derived from methacrylic acid: 15% by mass, neutralization degree with Na ion: 30%, MFR: 2.8 g/10 min)
- Ionomer 6: Na-Neutralized Product of Ethylene-Methacrylic Acid Copolymer
   (content of the structural unit derived from ethylene: 89% by mass, content of the structural unit derived from methacrylic acid: 11% by mass, neutralization degree with Na ion: 38%, MFR: 10 g/10 min)
- Ionomer 7: Product Name: HIMILAN 1601 manufactured by DOW-MITSUI POLYCHEMICALS CO., LTD.

### [Examples 1 and 2, Comparative Examples 1 to 4, and Reference Example 1]

### <Production of Film for Skin Pack>

Ionomers 1 to 6 (resin compositions for a skin pack) were produced by ionizing a part of the carboxy group of the ethylene-methacrylic acid copolymer using a vent-type single-screw extruder (screw diameter: 65 mm, L/D = 33). A single-layer film for a skin pack having a thickness of 100 µm (that is, the film for a skin pack including only the base layer) was obtained by a casting method at a processing speed of 10 m/min using each of the resin compositions for a skin pack and using a 40-mmφ single-layer cast forming machine. In the same manner, a single-layer film for a skin pack having a thickness of 100 µm (that is, the film for a skin pack including only the base layer) was obtained by a casting method at a processing speed of 10 m/min using the ionomer 7 as the resin composition for a skin pack and using a 40-mmφ single-layer cast forming machine.

### <Evaluation of Skin Packing Property>

A wood piece having a width of 7 cm, a depth of 5 cm, and a height of 2 cm was placed on a foamed polystyrene backing board having a depth of 1.2 cm, a length of 15 cm and a width of 15 cm (obtained by layering a film of a blend layer of polyethylene and polybutylene on a surface layer). The wood piece and the backing board were skin-packed together using the film for a skin pack under the conditions of the respective set temperatures shown in Table 1 below, a heating time of 1 second, an initial degree of vacuum of 1000 mbar, and a degree of vacuum of 10 mbar and using Tray sealer T200 manufactured by MULTIVAC.

After the skin pack packaging, the skin pack property was evaluated by checking the presence or absence of breakage or pinholes in the film for a skin pack. The skin pack property was evaluated according to the following criteria. The evaluation results are shown in Table 1.
A: The film for a skin pack was not broken and had no pinhole.
B: The film for a skin pack was broken or had pinholes.

**[Table 1]**

| | | | Example 1 | Example 2 | Comparative Example 1 | Comparative Example 2 | Comparative Example 3 | Comparative Example 4 | Reference Example 1 |
|---|---|---|---|---|---|---|---|---|---|
| Ionomer 1 (% by mass) | | | 100 | - | - | - | - | - | - |
| Ionomer 2 (% by mass) | | | - | 100 | - | - | - | - | - |
| Ionomer 3 (% by mass) | | | - | - | 100 | - | - | - | - |
| Ionomer 4 (% by mass) | | | - | - | - | 100 | - | - | - |
| Ionomer 5 (% by mass) | | | - | - | - | - | 100 | - | - |
| Ionomer 6 (% by mass) | | | - | - | - | - | - | 100 | - |
| Ionomer 7 (% by mass) | | | - | - | - | - | - | - | 100 |
| Content X (% by mass) of structural unit derived from unsaturated carboxylic acid | | | 20 | 20 | 15 | 10 | 15 | 11 | - |
| Neutralization degree Y (%) | | | 70 | 55 | 54 | 50 | 30 | 38 | |
| Melt flow rate Z (g/10 min) | | | 0.7 | 0.8 | 0.9 | 1.3 | 2.8 | 10 | |
| (XxYx0.01)/Z | | | 20.0 | 13.8 | 9.0 | 3.8 | 1.6 | 0.4 | |
| Melt tension (mN) | | | 452 | 347 | 315 | 231 | 114 | 29 | |
| Skin pack property | Set temperature | 90°C | A | A | A | A | B | B | A |
| | | 100°C | A | A | A | B | B | B | B |
| | | 110°C | A | A | B | B | B | B | B |
| | | 120°C | A | A | B | B | B | B | B |
| | | 130°C | A | B | B | B | B | B | B |
| | | 140°C | A | B | B | B | B | B | B |

In Table 1, "-" indicates that the corresponding ionomer is not contained or that the measurement has not been carried out. In Table 1, the numerical value described in the items of the ionomers 1 to 7 indicates the content of the ionomer in the resin composition contained in the base layer included in the produced film. In Table 1, X represents a content (% by mass) of a structural unit derived from an unsaturated carboxylic acid with respect to a total of structural units of the copolymer constituting the ionomer (A) of the ethylene-unsaturated carboxylic acid-based copolymer, Y represents a neutralization degree, which is a percentage, of the ionomer (A) of the ethylene-unsaturated carboxylic acid-based copolymer, and Z represents a melt flow rate, in g/10 min, of the ionomer (A) of the ethylene-unsaturated carboxylic acid-based copolymer as measured under conditions of 190°C and a load of 2160 g in accordance with JIS K 7210:1999.

As is apparent from the results shown in Table 1, the film for a skin pack using the resin composition for a skin pack of each of Examples 1 and 2 exhibited favorable skin packing property at a wide temperature during skin pack packaging. On the other hand, the film using the composition of each of Comparative Examples 1 to 4 and Reference Example 1 did not exhibit favorable skin packing property at a wide temperature during skin pack packaging.

As described above, it is evident that skin pack packaging exhibiting favorable skin packing property in a wide temperature range can be realized according to the resin composition for a skin pack of the disclosure.

## Claims

1. A film for a skin pack comprising a base layer and a sealant layer,
wherein the base layer contains a resin composition for a skin pack, comprising an ionomer (A) of an ethylene-unsaturated carboxylic acid-based copolymer,
wherein a content of the ionomer (A) in the resin composition for a skin pack is from 95% by mass to 100% by mass, with respect to a total mass of the resin composition for a skin pack,
wherein at least a part of the ionomer (A) of the ethylene-unsaturated carboxylic acid-based copolymer is neutralized with a sodium ion,
wherein a neutralization degree of the ionomer (A) of the ethylene-unsaturated carboxylic acid-based copolymer is 55% or more,
wherein a structural unit derived from an unsaturated carboxylic acid is contained in an amount of from 18% by mass to 25% by mass with respect to a total of structural units of the ethylene-unsaturated carboxylic acid-based copolymer,
wherein the ionomer (A) of the ethylene-unsaturated carboxylic acid-based copolymer satisfies the following Formula (1): $11 \leq \left(X\times Y\times 0.01\right) / Z$ Formula (1)
wherein, in Formula (1):
X represents a content (% by mass) of a structural unit derived from an unsaturated carboxylic acid with respect to a total of structural units of the copolymer constituting the ionomer (A) of the ethylene-unsaturated carboxylic acid-based copolymer,
Y represents a neutralization degree, which is a percentage, of the ionomer (A) of the ethylene-unsaturated carboxylic acid-based copolymer, and
Z represents a melt flow rate, in g/10 min, of the ionomer (A) of the ethylene-unsaturated carboxylic acid-based copolymer as measured under conditions of 190°C and a load of 2160 g in accordance with JIS K 7210:1999.

2. The film for a skin pack according to claim 1, wherein a thickness of the base layer is from 40 µm to 300 µm.

3. A method for producing the film for a skin pack according to claim 1 or 2, the method comprising forming the base layer using the resin composition for a skin pack by a casting method.

4. A skin pack packaging material comprising a backing board and the film for a skin pack according to claim 1 or 2.

5. A skin pack package comprising a backing board, a product to be packaged disposed on the backing board, and the film for a skin pack according to claim 1 or 2.

## Patentansprüche

1. Folie für eine Skinpack-Verpackung, umfassend eine Basisschicht und eine Dichtungsschicht,
wobei die Basisschicht eine Harzzusammensetzung für eine Skinpack-Verpackung enthält, umfassend ein Ionomer (A) eines Copolymers auf Basis von Ethylen und ungesättigter Carbonsäure,
wobei ein Gehalt des Ionomers (A) in der Harzzusammensetzung für eine Skinpack-Verpackung von 95 Masse-% bis 100 Masse-% in Bezug auf eine Gesamtmasse der Harzzusammensetzung für eine Skinpack-Verpackung beträgt,
wobei mindestens ein Teil des Ionomers (A) des Copolymers auf Basis von Ethylen und ungesättigter Carbonsäure mit einem Natriumion neutralisiert ist,
wobei ein Neutralisationsgrad des Ionomers (A) des Copolymers auf Basis von Ethylen und ungesättigter Carbonsäure 55 % oder mehr beträgt,
wobei eine Struktureinheit, die von einer ungesättigten Carbonsäure abgeleitet ist, in einer Menge von 18 Masse-% bis 25 Masse-% in Bezug auf eine Gesamtheit von Struktureinheiten des Copolymers auf Basis von Ethylen und ungesättigter Carbonsäure enthalten ist,
wobei das Ionomer (A) des Copolymers auf Basis von Ethylen und ungesättigter Carbonsäure die folgende Formel (1) erfüllt: $11 \leq \left(X\times Y\times 0,01\right) / Z$ Formula (1)
wobei in Formel (1):
X für einen Gehalt (Masse-%) einer Struktureinheit, die von einer ungesättigten Carbonsäure abgeleitet ist, in Bezug auf eine Gesamtheit von Struktureinheiten des Copolymers steht, das das Ionomer (A) des Copolymers auf Basis von Ethylen und ungesättigter Carbonsäure darstellt,
Y für einen Neutralisationsgrad, der ein Prozentsatz ist, des Ionomers (A) des Copolymers auf Basis von Ethylen und ungesättigter Carbonsäure steht und
Z für eine Schmelzflussrate, in g/10 min, des Ionomers (A) des Copolymers auf Basis von Ethylen und ungesättigter Carbonsäure steht, gemessen unter Bedingungen von 190 °C und einer Last von 2160 g gemäß JIS K 7210:1999.

2. Folie für eine Skinpack-Verpackung nach Anspruch 1, wobei eine Dicke der Basisschicht 40 µm bis 300 µm beträgt.

3. Verfahren zur Herstellung der Folie für eine Skinpack-Verpackung nach Anspruch 1 oder 2, wobei das Verfahren Bilden der Basisschicht unter Verwendung der Harzzusammensetzung für eine Skinpack-Verpackung durch ein Gießverfahren umfasst.

4. Verpackungsmaterial für eine Skinpack-Verpackung, umfassend eine Trägerplatte und die Folie für eine Skinpack-Verpackung nach Anspruch 1 oder 2.

5. Skinpack-Verpackung, umfassend eine Trägerplatte, ein zu verpackendes Produkt, das auf der Trägerplatte angeordnet ist, und die Folie für eine Skinpack-Verpackung nach Anspruch 1 oder 2.

## Revendications

1. Film pour un emballage « skin » comprenant une couche de base et une couche de scellage,
dans lequel la couche de base contient une composition de résine pour un emballage « skin », comprenant un ionomère (A) d'un copolymère à base d'éthylène et d'acide carboxylique insaturé,
dans lequel une teneur en ionomère (A) dans la composition de résine pour un emballage « skin » est de 95 % en masse à 100 % en masse, par rapport à une masse totale de la composition de résine pour un emballage « skin »,
dans lequel au moins une partie de l'ionomère (A) du copolymère à base d'éthylène et d'acide carboxylique insaturé est neutralisée par un ion sodium,
dans lequel un degré de neutralisation de l'ionomère (A) du copolymère à base d'éthylène et d'acide carboxylique insaturé est supérieur ou égal à 55 %,
dans lequel un motif structurel dérivé d'un acide carboxylique insaturé est contenu en une quantité de 18 % en masse à 25 % en masse par rapport à un total de motifs structurels du copolymère à base d'éthylène et d'acide carboxylique insaturé,
dans lequel l'ionomère (A) du copolymère à base d'éthylène et d'acide carboxylique insaturé satisfait la formule (1) suivante : $11 \leq \left(X\times Y\times 0,01\right) / Z$ Formula (1)
dans lequel, dans la formule (1) :
X représente une teneur (% en masse) d'un motif structurel dérivé d'un acide carboxylique insaturé par rapport à un total de motifs structurels du copolymère constituant l'ionomère (A) du copolymère à base d'éthylène et d'acide carboxylique insaturé,
Y représente un degré de neutralisation, qui est un pourcentage, de l'ionomère (A) du copolymère à base d'éthylène et d'acide carboxylique insaturé, et
Z représente un indice de fluidité à l'état fondu, en g/10 min, de l'ionomère (A) du copolymère à base d'éthylène et d'acide carboxylique insaturé tel que mesuré dans des conditions de 190 °C et sous une charge de 2160 g selon JIS K 7210:1999.

2. Film pour un emballage « skin » selon la revendication 1, dans lequel une épaisseur de la couche de base est de 40 µm à 300 µm.

3. Procédé de fabrication du film pour un emballage « skin » selon la revendication 1 ou 2, le procédé comprenant la formation de la couche de base à l'aide de la composition de résine pour un emballage « skin » par un procédé de coulée.

4. Matériau d'emballage « skin » comprenant une plaque de support et le film pour un emballage « skin » selon la revendication 1 ou 2.

5. Emballage « skin » comprenant une plaque de support, un produit à emballer disposé sur la plaque de support et le film pour un emballage « skin » selon la revendication 1 ou 2.
